# EUROPEAN PATENT APPLICATION

(11) **EP 4 749 707 A1**
(43) Date of publication of application: **27.05.2026**
(21) Application number: 25215696.3
(22) Date of filing: 13.11.2025
(51) Int. Cl.: H01M 4/133, H01M 4/134, H01M 4/36, H01M 4/38, H01M 4/587

(54) **NEGATIVE ELECTRODE FOR RECHARGEABLE LITHIUM BATTERY AND RECHARGEABLE LITHIUM BATTERY INCLUDING SAME**

(30) Priority: 21.11.2024 KR 20240167619
(71) Applicant: SAMSUNG SDI CO., LTD., Yongin-si, Gyeonggi-do 17084 (KR)
(72) Inventor: KIM, Hyunchul, 17084 Yongin-si, Gyeonggi-do (KR); HONG, Chan, 17084 Yongin-si, Gyeonggi-do (KR); KIM, Sanggi, 17084 Yongin-si, Gyeonggi-do (KR); KWAK, Junhyeok, 17084 Yongin-si, Gyeonggi-do (KR); AN, Eunjin, 17084 Yongin-si, Gyeonggi-do (KR); KIM, Yongin, 17084 Yongin-si, Gyeonggi-do (KR); KIM, Yongsoo, 17084 Yongin-si, Gyeonggi-do (KR)
(74) Representative: Michalski Hüttermann & Partner Patentanwälte mbB

(57) **Abstract**

Disclosed are a negative electrode for a rechargeable lithium battery and a rechargeable lithium battery including the negative electrode. The negative electrode includes a current collector and a negative electrode active material layer on the current collector. The negative electrode active material layer includes a first region, a second region, and an edge region, the first region is in contact with the edge region, and the second region is not in contact with the edge region, the second region includes a crystalline carbon negative electrode active material. The edge region includes a first layer in contact with the current collector and including a silicon-carbon composite negative electrode active material and a second layer disposed on the first layer and including a crystalline carbon negative electrode active material.

## Description

### BACKGROUND

### 1. Field

A negative electrode for a rechargeable lithium battery, and a rechargeable lithium battery including the negative electrode are disclosed.

### 2. Description of the Related Art

The increased presence of electronic devices such as, e.g., mobile phones, laptop computers, and electric vehicles, and the like, using batteries increased the demand for rechargeable batteries with relatively high capacity and lighter weight. Particularly, rechargeable lithium batteries are used as driving power sources for portable devices, as they typically have a lighter weight and a high energy density. Accordingly, improving the performance of rechargeable lithium batteries may be advantageous.

Rechargeable lithium batteries include a positive electrode and a negative electrode including an active material capable of intercalating and deintercalating lithium ions, and an electrolyte solution, and generate electrical energy through oxidation and reduction reactions when lithium ions are intercalated into and deintercalated from the positive electrode and the negative electrode.

### SUMMARY

Some example embodiments include a negative electrode for a rechargeable lithium battery capable of providing a battery having uniformly desired or improved quality.

Some example embodiments include a rechargeable lithium battery including the negative electrode.

Some example embodiments include a negative electrode for a rechargeable lithium battery including a current collector; and a negative electrode active material layer on the current collector, wherein the negative electrode active material layer includes a first region, a second region, and an edge region. The first region is in contact with the edge region, and the second region is not in contact with the edge region, the second region includes a crystalline carbon negative electrode active material, the edge region includes a first layer in contact with the current collector and including a silicon-carbon composite negative electrode active material and a second layer disposed on the first layer and including a crystalline carbon negative electrode active material. The first layer extends from one end of the first region toward the end of the negative electrode active material layer to a width in a range of about 45% to about 85% of a total width (100%) to the end of the negative electrode active material layer from the first region, and the first layer is spaced apart from the end of the edge region.

According to some example embodiments, a rechargeable lithium battery includes the negative electrode; a positive electrode; and an electrolyte.

A negative electrode for a rechargeable lithium battery according to some example embodiments may uniformly provide a battery of desired or improved quality.

### BRIEF DESCRIPTION OF THE DRAWINGS

FIG. 1 is a cross-sectional view schematically showing a negative electrode for a rechargeable lithium battery, according to some example embodiments.
FIG. 2A is a cross-sectional view schematically showing a conventional battery configuration and FIG. 2B is a cross-sectional view schematically showing a battery configuration according to some example embodiments.
FIGS. 3 and 4 are cross-sectional views schematically illustrating numerical values at the negative electrode according to some example embodiments.
FIG. 5 is a cross-sectional view showing a case where the sum of the total width and the separation distance of the first layer is greater than the width of the edge region.
FIG. 6 is a cross-sectional view showing the protrusion of the edge region.
FIGS. 7 to 10 are cross-sectional views schematically showing rechargeable lithium batteries according to some example embodiments.
FIG. 11 is a cross-sectional view schematically showing the negative electrode of Comparative Example 1.

### DETAILED DESCRIPTION OF THE DISCLOSURE

Hereinafter, example embodiments are described in detail. However, these embodiments are merely examples, the present disclosure is not limited thereto, and the present disclosure is defined by the scope of claims.

As used herein, when specific definition is not otherwise provided, It is understood that when an element such as a layer, film, region, or substrate is referred to as being "on" another element, the element may be directly on the other element, or intervening elements may also be present.

Unless otherwise specified in this specification, what is indicated in the singular may also include the plural. In addition, unless otherwise specified, "A or B" may mean "including A, including B, or including A and B."

As used herein, "combination thereof" may refer to a mixture, a laminate, a composite, a copolymer, an alloy, a blend, a reaction product, and the like of the constituents.

As used herein, when a definition is not otherwise provided, the particle diameter may be an average particle diameter. In addition, the particle diameter may refer to an average particle diameter (D₅₀), which indicates the diameter of particles having a cumulative volume of 50 volume% in the particle size distribution. The average particle size (D₅₀) may be measured by methods known to those skilled in the art, for example, by using a particle size analyzer, or by measuring using a transmission electron microscope (TEM) or a scanning electron microscope (SEM). Alternatively, a dynamic light-scattering measurement device is used to perform a data analysis, and the number of particles is counted for each particle size range. From this, the average particle diameter (D₅₀) value may be readily obtained through a calculation. Alternatively, it may be measured using a laser diffraction method. When measuring by the laser diffraction method, more specifically, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D₅₀) on the basis of 50% of the particle diameter distribution in the measuring device.

In some example embodiments, the average particle diameter may be measured by various methods described above, for example, via a particle size analyzer.

In some example embodiments, the thickness may be measured using an SEM or TEM image of a cross-section, but the present disclosure is not limited thereto and may be measured using any method that may measure thickness in the relevant field. The thickness may be an average thickness.

As used herein, soft carbon refers to a graphitizable carbon material that may be graphitized by heat treatment at high temperatures, for example at about 2800 °C, and hard carbon refers to non-graphitizable carbon material that is not graphitized by heat treatment. The soft carbon and hard carbon are known in the art.

In some example embodiments, crystalline carbon and amorphous carbon may be classified by X-ray diffraction analysis. The crystalline carbon includes natural graphite and artificial graphite. The natural graphite refers to naturally occurring graphite obtained by separation from minerals, and having, upon X-ray diffraction analysis, d002 in a range of about 3.350 Å to about 3.360 Å. The artificial graphite refers to graphite made by graphitization and having, upon X-ray diffraction analysis, d002 in a range of about 3.355 Å to about 3.365 Å. The amorphous carbon has a d002 that is less than or equal to about 3.34 Å when analyzed by X-ray diffraction. The X-ray diffraction analysis (XRD) uses CuKα ray as a target line and uses an X-ray diffraction analyzer, for example, X'Pert (manufacturer: Malvern Panalytical), and to improve peak intensity resolution, the monochromator equipment may be removed and measured. The measurement conditions may be 2θ=10 ° to 80 °, scan rate (°/s) = 0.044 to 0.089, and step size (°/step) = 0.013 to 0.039.

In some example embodiments, the weight average molecular weight may be measured by gel permeation chromatography.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

The negative electrode for a rechargeable lithium battery according to some example embodiments includes a current collector; and a negative electrode active material layer on the current collector. The negative electrode active material layer includes a first region, a second region, and an edge region. In some example embodiments, the first region is in contact with the edge region, and the second region is not in contact with the edge region, the second region and the edge region include a crystalline carbon negative electrode active material, and the first region includes a first layer in contact with the collector and including a silicon-carbon composite negative electrode active material and a second layer disposed on the first layer and including a crystalline carbon negative electrode active material. The first layer extends from one end of the first region toward the end of the negative electrode active material layer to a width in a range of about 45% to about 85% of a total width (100%) to the end of the negative electrode active material layer from the first region, and the first layer is spaced apart from the end of the edge region.

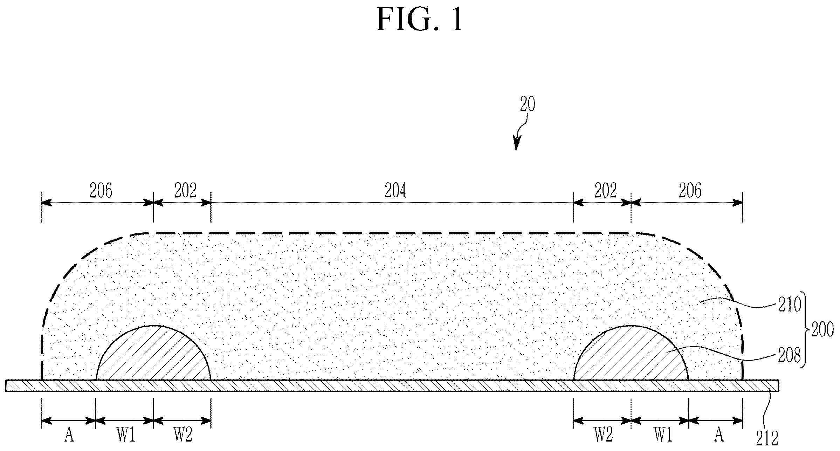

FIG. 1 is a cross-sectional view schematically showing a negative electrode 20 for a rechargeable lithium battery 100 according to some example embodiments. As shown in FIG. 1, the negative electrode active material layer 200 includes a first region 202, a second region 204, and an edge region 206, and the edge region 206 includes a first layer 208 and a second layer 210.

In some example embodiments, the edge region 206 may have a sliding region having a thickness gradient of the negative electrode active material layer 200, and the first region 202 and the second region 204 may have a flat region having a substantially uniform average thickness of the negative electrode active material layer 200.

The flat region refers to a region in which the exposed surface of the negative electrode active material layer 200 has a flat shape, and the average thickness of the negative electrode active material layer 200 is substantially uniform. The sliding region refers to a region where the exposed surface of the negative electrode active material layer 200 has a curved shape and a thickness that is lower than the average thickness of the flat region, and which has a gradient in which the average thickness of the negative electrode active material layer 200 decreases toward the outer side in the width direction, for example, a thickness gradient. The "width direction" is the horizontal direction with respect to the current collector 212.

In some example embodiments, the first layer 208 extends from one end, for example, an end of the first region 202, toward the end of the negative electrode active material layer 200 with a width in a range of about 45% to about 85% (W1 in FIG. 1) of a total width 100% (A+W1 in FIG. 1) to the end of the negative electrode active material layer 200 from the first region 202, for example, with a width in a range of about 46% to about 82%, and the first layer 208 is spaced apart from the end of the edge region 206.

When the width (W1 in FIG. 1) extending from the end of the first region 202 toward the end of the negative electrode active material layer 200 is within the above range, the sliding region may be reduced while reducing or preventing the edge region 206 from protruding higher than the first region 202. Since the first layer 208 is spaced apart from the end of the edge region 206, the first layer 208 may not be exposed to the outside.

In addition, since the first layer 208 is formed at the bottom of the edge region 206, the thickness of the edge region 206 increases, and thus the adhesive force between the current collector 212 and the active material layer may be increased. In addition, as the thickness of the edge region 206 increases, an area of the edge region 206 of the active material layer in contact with the separator 30 also increases, and thus the adhesive strength in the edge region 206 may also increase.

The first region 202 may include crystalline carbon.

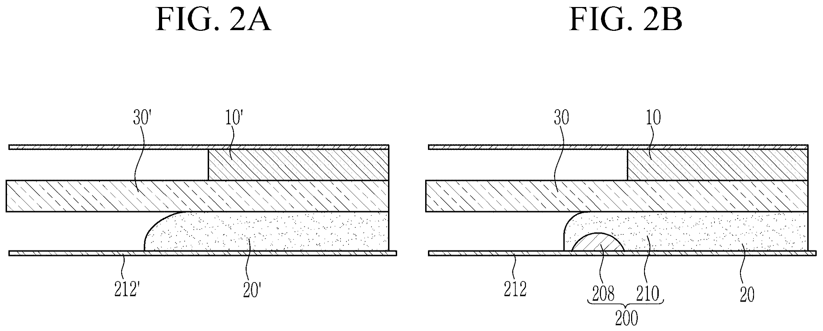

FIG. 1 shows a configuration in which the first layer 208 is partially extended in the first region direction, but is not limited thereto. For example, it is important that the first layer 208 is formed in the edge region 206, and it may or may not be formed by extending in the direction of the first region 202. When the first layer 208 is formed at the bottom of the first region 202, the width of the first region (W2 in FIG. 1) may be equal to the width (W1 in FIG. 1) extending from the end of the first region 202 toward the end of the negative electrode active material layer 200. FIGS. 2A and 2B illustrate a conventional battery configuration (FIG. 2A) and a battery configuration according to some example embodiments (FIG. 2B). As shown in FIGS. 2A and 2B, the width of the section where the edge region 206 of the negative electrode active material layer 200 slides is conventionally long and deep, and thus an area where the edge region 206 of the negative electrode active material layer 200 comes into contact with the separator 30 is substantially small. Additionally, the height of the negative electrode active material layer 200 formed on the current collector 212 may be low in the edge region 206. On the other hand, because the battery according to some example embodiments has a small sliding width in the edge region 206 of the negative electrode active material layer 200, an area in contact with the separator 30 in the edge region 206 is large, and a height of the negative electrode active material layer 200 formed on the current collector 212 is high.

In some example embodiments, the separation distance (A in FIG. 1) from the end of the edge region 206 may be greater than or equal to about 1 mm, and may be in a range of about 1 mm to about 10 mm. When the separation distance A exceeds about 10 mm, the adhesive strength between the current collector and the active material layer may be reduced.

In some example embodiments, the first region 202 may include a crystalline carbon negative electrode active material. According to some example embodiments, the first region 202 may include a first layer 208 in contact with the current collector 212 and including a silicon-carbon composite negative electrode active material, and a second layer 210 disposed on the first layer 208 and including a crystalline carbon negative electrode active material. For example, the first layer 208 formed in the edge region 206 and the second layer 210 may extend to the first region 202 and be included in the first region 202.

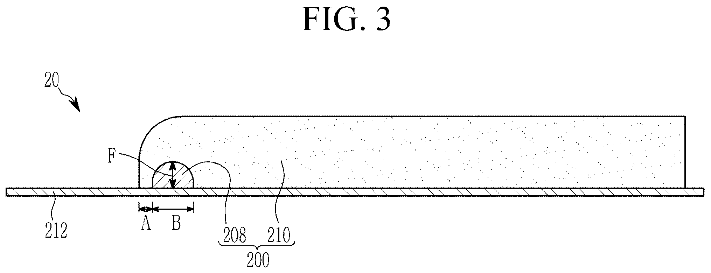

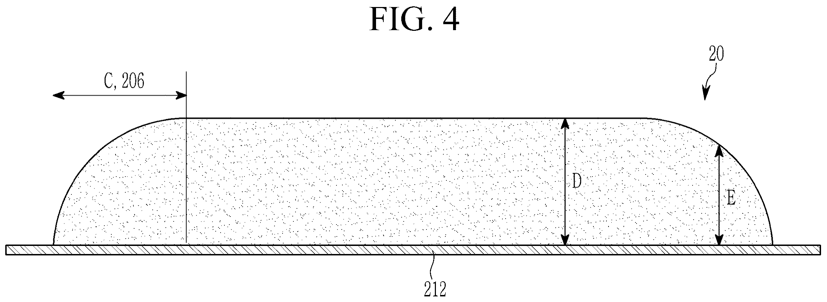

FIGS. 3 and 4 are drawings providing an illustration of the negative electrode 20 according to some example embodiments. In FIGS. 3 and 4, the first region 202, second region 204 and edge region 206 are omitted.

According to some example embodiments, the first layer 208 of the edge region 206 and the first layer 208 of the first region 202 include a silicon-carbon composite negative electrode active material, and the sum of the total width of the first layer (B in FIG. 3, the total width of the first layer 208 positioned at the bottom) and the separation distance (A in FIG. 3) may be equal to or smaller than the width of the edge region (C in FIG. 4). In some example embodiments, the edge region 206 includes a sliding region, and because the shape of the edge region 206 is more specifically expressed as the sliding region, the width of the edge region 206 may indicate the width of the sliding region.

For example, a sum of the total width of the first layer 208 and the separation distance A may be equal to or less than the width of the edge region 206. For example, the sum of the total width of the first layer 208 and the separation distance A may be in a range of about 50% to about 100%, about 60% to about 90%, or about 60% to about 80% of the width of the edge region 206. For example, when the width of the edge region 206 is equal to about 10 mm, the separation distance A may be equal to about 1 mm and the sum of the widths of the first layer 208 may be less than or equal to about 9 mm.

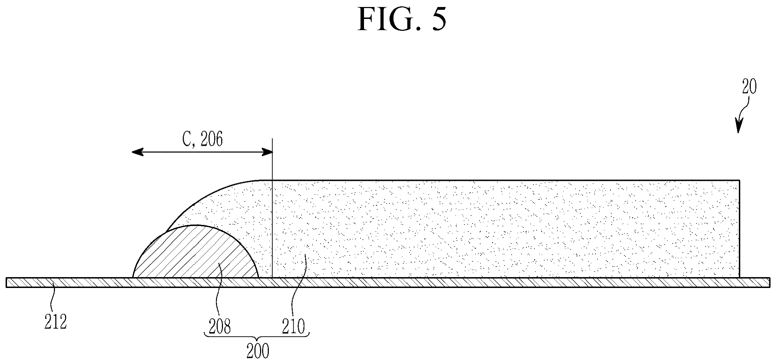

When the sum of the total width and the separation distance A of the first layer 208 is equal to or smaller than the width of the edge region 206, the width of the edge region 206 may be reduced and the protrusion of the edge region 206 may not occur. For example, when the sum of the total width and the separation distance A is greater than the width of the edge region 206, the total width of the sliding region may increase as the first layer 208 is exposed to the outside, as shown in FIG. 5.

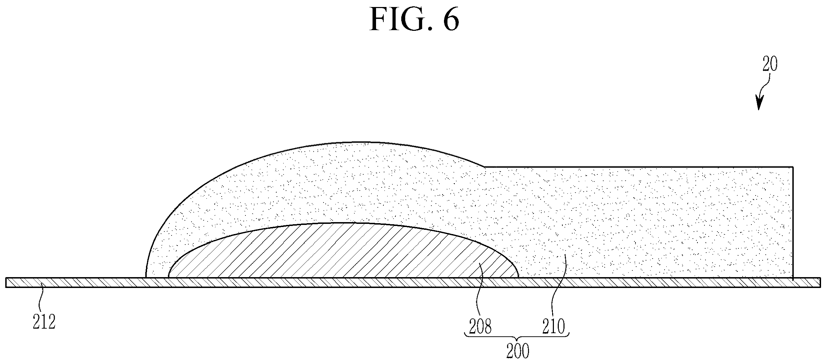

The total width of the first layer 208 (W1+W2 in FIG. 1, B in FIG. 3) may be in a range of about 1% to about 7%, or about 1% to about 5% of the total width (100%) of the negative electrode active material layer 200. The total width of the first layer 208 may be, for example, in a range of about 1 mm to about 20 mm, about 5 mm to about 15 mm, or about 6 mm to about 9.5 mm. When the total width satisfies the above range, the width of the edge region 206 may be reduced without causing the edge region 206 to protrude. For example, when the total width of the first layer exceeds the above range, a protrusion of the edge region 206 may occur, as shown in FIG. 6.

The width of the edge region 206 may be in a range of about 0.5% to about 10%, about 2.5% to about 7.5%, or about 3% to about 4.5% of the total width (100%) of the negative electrode active material layer 200. For example, the width of the edge region 206 may be in a range of about 1 mm to about 20 mm, about 5 mm to about 15 mm, or about 6 mm to about 9 mm. When the width of the edge region 206 satisfies the above range, a loading amount of the negative electrode active material in the central region of the negative electrode active material layer 200, for example, the first region 202 and the second region 204, may be higher than the loading amount of the negative electrode active material in the edge region 206.

In some example embodiments, the first region 202 may be in a range of about 0.5% to about 3.5% of the total width (100%) of the negative electrode active material layer 200, and refers to a region corresponding to a range of about 0.5% to about 2.5%. For example, the first region 202 may be in contact with the edge region 206, and may extend from the edge region 206 toward the second region 204 by a width corresponding to a range of about 0.5% to about 3.5%, or about 0.5% to about 2.5%, of the total width (100%) of the negative electrode active material layer 200.

In some example embodiments, the second region 204 refers to a region located in the central portion of the negative electrode active material layer 200 excluding the edge region 206 and the first region 202.

The maximal thickness of the first layer (F in FIG. 3) may be equal to or less than (the average thickness of the negative electrode active material layer (D in FIG. 4) - average thickness of the edge region (E in FIG. 4)), in other words the maximal thickness of the first layer 208 may be equal to or less than a difference between the average thickness of the negative electrode active material layer 200 and the average thickness of the edge region 206. For example, the average thickness of the first layer 208 may be in a range of about 50% to about 100%, about 60% to about 90%, or about 60% to about 80% of the difference between (average thickness of the negative electrode active material layer 200 minus average thickness of the edge region 206).

When the maximal thickness of the first layer 208 is equal to or smaller than the difference between (average thickness of the negative electrode active material layer 200 minus average thickness of the edge region 206), the length of the sliding region may be reduced without causing protrusion of the edge region 206.

In some example embodiments, the maximal thickness of the first layer 208 may be in a range of about 30% to about 100%, about 35% to about 75%, or about 40% to about 50% of the total thickness 100% of the negative electrode active material layer 200. When the maximal thickness of the first layer 208 satisfies the above range, the sliding region may be minimized.

The average thickness of the negative electrode active material layer 200 need not be limited, but may be, for example, in a range of about 60 µm to about 200 µm, about 70 µm to about 150 µm, or about 80 µm to about 100 µm.

In some example embodiments, the first layer 208 of the edge region 206 includes a silicon-carbon composite negative electrode active material, and the second layer 210 includes a crystalline carbon negative electrode active material. Because the high-capacity silicon-carbon composite negative electrode active material is included in the first layer 208, capacity of the negative electrode may be improved, and accordingly, an N/P ratio, which is a ratio of capacity of the negative electrode to the capacity of a positive electrode, may be improved to be greater than about 1, and thus reduces or prevents the risks of short circuit and fire due to lithium precipitation which may occur when the N/P ratio is less than or equal to about 1. In addition, the second layer 210 is positioned on the first layer 208, and the first layer 208 is also apart from the end of the edge region 206, for example, the second layer 210 is disposed to surround one side of the first layer 208. Accordingly, the crystalline carbon negative electrode active material is disposed on the outside of the negative electrode active material layer 200, but the silicon-carbon composite negative electrode active material is surrounded with the crystalline carbon negative electrode active material and disposed thereinside, and thus may constitute a buffer during the charge and discharge to reduce or prevent volume expansion of the silicon-carbon composite negative electrode active material.

When the negative electrode active material layer 200 including the silicon-carbon composite negative electrode active material is first formed, and then the layer including the crystalline carbon negative electrode active material is formed in the edge region 206 where the sliding region occurs, it may be challenging to coat the sliding region with an appropriate or desired amount, making it challenging to ensure a uniform quality of the manufactured negative electrode.

In some example embodiments, the silicon-carbon composite is or includes a composite of silicon and carbon, and may include silicon particles and a carbon-based material. The carbon-based material may be or include amorphous carbon, crystalline carbon, or a combination thereof. The crystalline carbon may be or include natural graphite, artificial graphite or a combination thereof in the form of unspecified, plate-shaped, flake-shaped, spherical or fibrous graphite. The amorphous carbon may be or include at least one of soft carbon, hard carbon, a mesophase pitch carbonized product, calcined coke, or a combination thereof.

The silicon-carbon composite may be in a form of silicon particles, and amorphous carbon coated on the surface of the silicon particles. For example, the silicon-carbon composite may include silicon particles and an amorphous carbon coating layer on the surface of the silicon particles. In another example embodiments, the silicon-carbon composite may include a secondary particle (core) in which silicon primary particles are aggregated, and an amorphous carbon coating layer (shell) on the surface of the secondary particle. The amorphous carbon may also be between the primary silicon particles, and, for example, the primary silicon particles may be coated with the amorphous carbon. For example, the secondary particles may be dispersed in an amorphous carbon matrix. The silicon primary particles may be or include nano silicon particles. An average particle diameter of the nano silicon particles may be in a range of about 10 nm to about 900 nm, about 10 nm to about 800 nm, about 10 nm to about 500 nm, about 10 nm to about 300 nm, or about 10 nm to about 200 nm. When the average particle diameter of the nano silicon particles is within the above range, substantial volume expansion that typically occurs during charging and discharging may be reduced or suppressed, and disconnection of the conductive path due to particle crushing during charging and discharging may be reduced or prevented. In some example embodiments, the particle size of the secondary particles need not be limited.

A thickness of the amorphous carbon coating layer may be controlled as desired, but may be, for example, in a range of about 2 nm to about 800 nm, about 5 nm to about 600 nm, about 10 nm to about 400 nm, or about 20 nm to about 200 nm. The thickness of the amorphous carbon coating layer may be measured by SEM or TEM images of a cross-section of the silicon-carbon composite, but is not limited thereto, and any method capable of measuring the thickness of the amorphous carbon coating layer in the relevant field may be used.

The average particle size of the silicon-carbon composite may be suitably controlled, and may be, for example, less than or equal to about 30 µm, for example, in a range of about 1 µm to about 30 µm, about 2 µm to about 25 µm, about 3 µm to about 20 µm, or about 5 µm to about 15 µm.

Based on 100 wt% of the silicon-carbon composite, an amount of the silicon particles may be in a range of about 30 wt% to about 70 wt%, or about 40 wt% to about 65 wt%. Additionally, the amount of the amorphous carbon may be in a range of about 30 wt% to about 70 wt%, or about 35 wt% to about 60 wt%, based on 100 wt% of the total silicon-carbon composite. When the amount of the silicon particles and amorphous carbon satisfies the above range, higher capacity may be achieved.

In some example embodiments, the silicon-carbon composite may include a core including silicon particles and crystalline carbon, and an amorphous carbon coating layer on a surface of the core. For example, the silicon-carbon composite may include a core including secondary particles in which silicon primary particles and crystalline carbon are aggregated, and an amorphous carbon coating layer on the core. The amorphous carbon may be located between silicon primary particles or between crystalline carbon, so that amorphous carbon may be filled between silicon primary particles or crystalline carbon.

When the silicon-carbon composite includes silicon particles, crystalline carbon, and amorphous carbon, the amount of the crystalline carbon may be in a range of about 10 wt% to about 70 wt%, or about 20 wt% to about 60 wt%, based on a total 100 wt% of the silicon particles, the amorphous carbon, and the crystalline carbon. The amount of the amorphous carbon may be in a range of about 20 wt% to about 40 wt%, or about 20 wt% to about 30 wt%, and the amount of the silicon particles may be about 10 wt% to about 70 wt%, or about 10 wt% to about 60 wt%.

In some example embodiments, the crystalline carbon negative electrode active material included in the second layer 208 may be graphite such as natural graphite or artificial graphite in an unspecified shape, plate shaped, flake shape, spherical shape, or fibrous shape.

In the negative electrode active material layer 200, the second region 204 includes a negative electrode active material that is a crystalline carbon negative electrode active material, the edge region 206 and the first region 202 include a first layer 208 and a second layer 210, the negative electrode active material in the first layer 208 is a silicon-carbon composite, and the negative electrode active material in the second layer 210 is crystalline carbon.

The negative electrode active material layer 200 includes a binder and a conductive material. For example, the edge region 206, the first region 202, and the second region 204 all include a negative electrode active material, a binder, and a conductive material, and the amounts of the negative electrode active material and binder are described according to the type of negative electrode active material. For example, when the negative electrode active material includes a silicon-carbon composite, an amount of the silicon-carbon composite negative electrode active material may be in a range of about 70 wt% to about 99 wt%, or about 80 wt% to about 98 wt%, based on 100 wt% of the total amount of the silicon-carbon composite negative electrode active material, the binder, and the conductive material.

When the negative electrode active material includes crystalline carbon, an amount of the crystalline carbon negative electrode active material may be in a range of about 70 wt% to about 99 wt%, or about 80 wt% to about 98 wt%, based on a total amount 100 wt% of the crystalline carbon negative electrode active material, the binder, and the conductive material.

When the negative electrode active material includes crystalline carbon, the amount of the binder may be in a range of about 1 wt% to about 5 wt%, or about 2 wt% to about 4 wt%, based on 100 wt% of the total amount of the crystalline carbon negative electrode active material, the binder, and the conductive material.

When the negative electrode active material includes a silicon-carbon composite, the amount of the binder may be in excess, for example, of a range of about 1.5 times to about 2 times, compared to when the negative electrode active material includes a crystalline carbon negative electrode active material. For example, the amount of the binder may be in a range of about 2 wt% to about 8 wt%, or about 2 wt% to about 6 wt%, based on a total 100 wt% of the silicon carbon-composite negative electrode active material, the binder, and the conductive material.

An amount of the conductive material may be in a range of about 1 wt% to about 5 wt%, or about 2 wt% to about 4 wt%, based on a total 100 wt% of the negative electrode active material, the binder, and the conductive material, regardless of the type of the negative electrode active material.

The binder is configured to attach the negative electrode active material particles to each other, and to attach the negative electrode active material to the current collector. The binder may include a non-aqueous binder, an aqueous binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When an aqueous binder is included as the negative electrode binder, a cellulose-based compound capable of imparting viscosity may be further included. The cellulose-based compounds may also constitute an aqueous binder. The cellulose-based compound may include at least one of carboxymethyl cellulose, hydroxypropylmethyl cellulose, methyl cellulose, or an alkali metal salt thereof. The alkali metal may include at least one of Na, K, or Li.

The conductive material is included to impart conductivity to the electrode, and any material that does not cause chemical change and conducts electrons may be included in the battery. Examples thereof may include a carbon-based material such as at least one of natural graphite, artificial graphite, carbon black, acetylene black, Ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative electrode current collector 212 may be or include at least one of copper foil, nickel foil, stainless steel foil, titanium foil, nickel foam, copper foam, a polymer substrate coated with a conductive metal, and a combination thereof.

### Rechargeable Lithium Battery:

Some example embodiments include a rechargeable lithium battery including the negative electrode, a positive electrode, and an electrolyte.

### Positive Electrode:

The positive electrode may include a current collector, and a positive electrode active material layer on the current collector. The positive electrode active material layer includes a positive electrode active material, and may further include a binder and/or a conductive material.

For example, the positive electrode may further include an additive that may constitute a sacrificial positive electrode.

An amount of the positive electrode active material may be in a range of about 90 wt% to about 99.5 wt% based on 100 wt% of the positive electrode active material layer, and the amount of each of the binder and the conductive material may be in a range of about 0.5 wt% to about 5 wt%, respectively, based on 100 wt% of the positive electrode active material layer.

The positive electrode active material may include a compound (lithiated intercalation compound) capable of intercalating and deintercalating lithium. For example, at least one of a composite oxide of lithium and a metal such as or including at least one of cobalt, manganese, nickel, and combinations thereof **may be included.**

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be included. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O₂₋ₐDₐ (0.90≤a≤1.8, 0≤b≤0.5, 0≤c≤0.5, 0<a<2); LiₐNi_{1-b-c}Mn_{b}X_{c}O₂₋ₐDₐ (0.90≤a≤1.8, 0≤b≤0.5, 0≤c≤0.5, 0<α<2); LiₐNi_{b}Co_{c}L¹dGₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a ≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

For example, the positive electrode active material may be or include a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol%, based on 100 mol% of the metal excluding lithium in the lithium transition metal composite oxide. The high-nickel-based positive electrode active material may achieve high capacity and may be applicable to a high-capacity, high-density rechargeable lithium battery.

The binder is configured to attach the positive electrode active material particles to each other, and to attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, a polypropylene, styrene-butadiene rubber, a (meth)acrylated styrene-butadiene rubber, an epoxy resin, a (meth)acrylic resin, polyester resin, and nylon, but are not limited thereto.

The conductive material is included to provide electrode conductivity, and any electrically conductive material may be included as a conductive material unless the electrically conductive material causes an adverse chemical change in the battery. Examples of the conductive material may include a carbon-based material such as at least one of natural graphite, artificial graphite, carbon black, **acetylene** black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The current collector may include Al, but is not limited thereto.

### Electrolyte:

The electrolyte includes a non-aqueous organic solvent and a lithium salt.

The non-aqueous organic solvent is configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, v -butyrolactone, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like. The aprotic solvent may include at least one of nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like. The non-aqueous organic solvent may be included alone or in a mixture of two or more types of solvents.

When using the carbonate-based solvent, a cyclic carbonate and a chain carbonate may be mixed, and the cyclic carbonate and the chain carbonate may be mixed in a volume ratio in a range of about 1:1 to about 1:9.

The electrolyte may further include at least one of vinylethyl carbonate, vinylene carbonate, difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or a combination thereof as an additive.

The lithium salt dissolved in the organic solvent is configured to supply lithium ions in a battery, to enable an operation of a rechargeable lithium battery, and to improve transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

### Separator:

Depending on the type of the rechargeable lithium battery, a separator may be present between the positive electrode and the negative electrode. A suitable separator material may include at least one of polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The separator may include a porous substrate and a coating layer including an organic material, an inorganic material, or a combination thereof, on one surface, or on both surfaces, of the porous substrate.

The porous substrate may be or include a film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

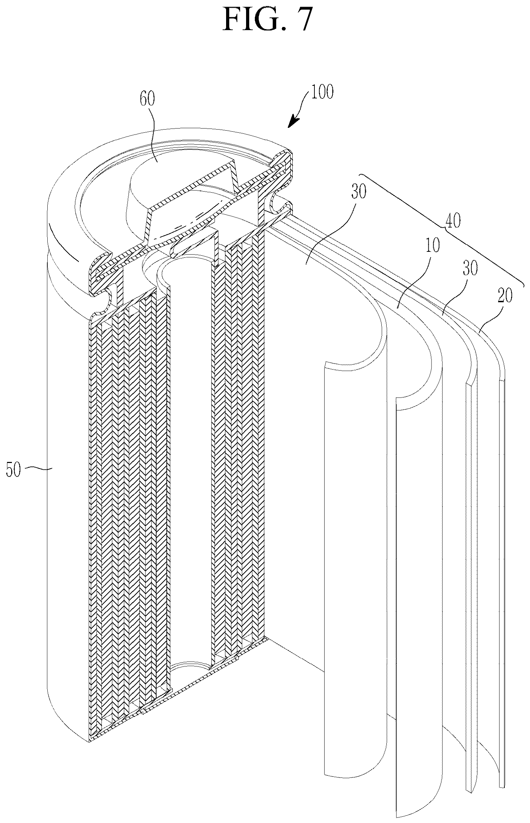

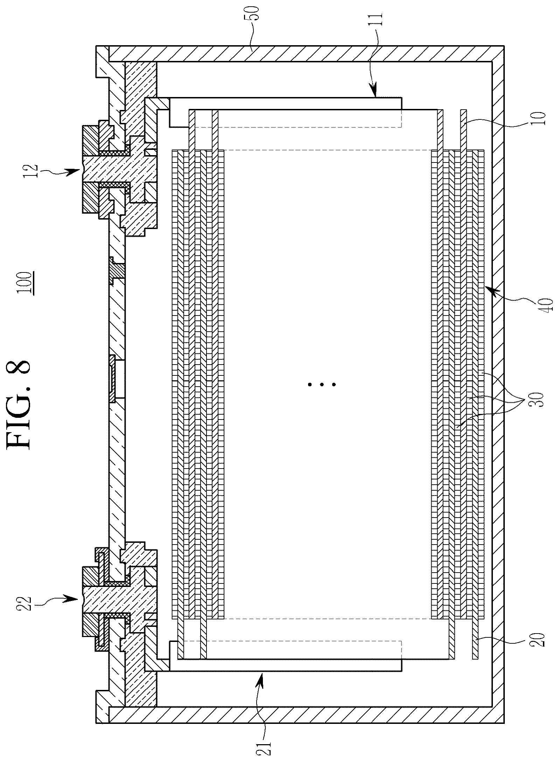

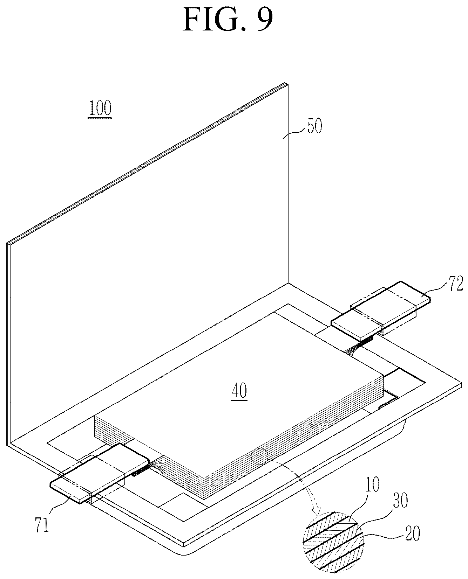

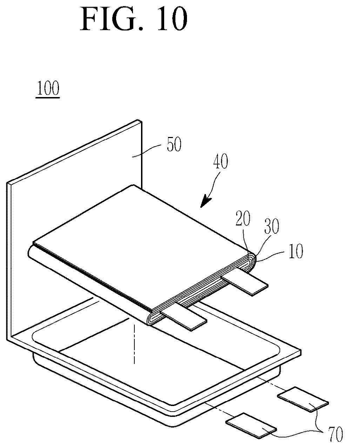

The rechargeable lithium battery may be classified into cylindrical, square, pouch, and coin types depending on the shape thereof. FIGS. 7 to 10 are schematic views illustrating a rechargeable lithium battery according to some example embodiments. FIG. 7 shows a cylindrical battery, FIG. 8 shows a prismatic battery, and FIGS. 9 and 10 show pouch-type batteries. Referring to FIGS. 7 to 10, the rechargeable lithium battery 100 includes an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte (not shown). The rechargeable lithium battery 100 may include a sealing member 60 that seals the case 50 as shown in FIG. 7. Additionally, in FIG. 8, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 9 and 10, the rechargeable lithium battery 100 includes an electrode tab 70 illustrated in FIG. 10, or a positive electrode tab 71 and a negative electrode tab 72 illustrated in FIG. 9, the electrode tabs 70/71/72 forming an electrical path for inducing the current formed in the electrode assembly 40 to the outside of the battery 100.

The rechargeable lithium battery according to some example embodiments may be applicable to, e.g., automobiles, mobile phones, and/or various types of electric devices, but the present disclosure is not limited thereto.

Examples and comparative examples of the present disclosure are described below. However, the following examples are only examples of the present disclosure, and the present disclosure is not limited to the following examples.

### Example 1:

98 wt% of a silicon-carbon composite negative electrode active material, 1 wt% of carboxymethyl cellulose, and 1 wt% of a styrene-butadiene rubber were mixed in water to prepare a first negative electrode active material slurry.

The silicon-carbon composite negative electrode active material was in the form of a secondary particle of an aggregate in which artificial graphite and silicon were aggregated and a soft carbon coating layer formed on the aggregate surface, wherein an amount of the artificial graphite was 60 wt%, an amount of the silicon nano particles was 20 wt%, and an amount of the amorphous carbon was 20 wt% based on a total weight of the silicon-carbon composite negative electrode active material.

A second negative electrode active material slurry was prepared by mixing 98 wt% of an artificial graphite negative electrode active material, 1 wt% of carboxymethyl cellulose, and 1 wt% of styrene-butadiene rubber in water.

The first negative electrode active material slurry was coated on a Cu foil current collector, and then dried to form a first layer with a total width of 9 mm at the end of the Cu foil current collector. The first layer was respectively formed with the same width at both ends of the current collector. Herein, the negative electrode active material layer was set to have a total width of 200 mm.

The second negative electrode active material slurry was coated to cover the first layer on the entire Cu foil current collector, and then dried and compressed to form a second layer on the first layer, manufacturing a negative electrode with a negative electrode active material layer in which the first layer was formed on the second layer.

The manufactured negative electrode had a structure shown in FIG. 1, wherein the negative electrode active material layer included a first region, a second region, and an edge region.

A, B, C, D, E, and F shown in FIGS. 3 and 4 were provided in Table 1 below. In addition, W1 of FIG. 1 was provided in Table 1 below.

The negative electrode, a lithium metal counter electrode, and an electrolyte were used to manufacture a half cell. The electrolyte was prepared by mixing ethylene carbonate, ethylmethyl carbonate, and dimethyl carbonate (in a volume ratio of 30:50:20) and dissolving 1.0 M LiPF₆ in the mixed solvent.

### Examples 2 and 3:

A negative electrode and a half cell were manufactured in the same manner as in Example 1, with a difference that A, B, C, D, E, and F shown in FIGS. 3 and 4 and W1 shown in FIG. 1 were changed as shown in Table 1 below.

### Comparative Example 1:

The second negative electrode active material slurry of Example 1 was coated and dried to form a graphitic layer on one surface of a copper current collector. The graphitic layer was formed to have a sliding region with a width of 10.2 mm in an edge region.

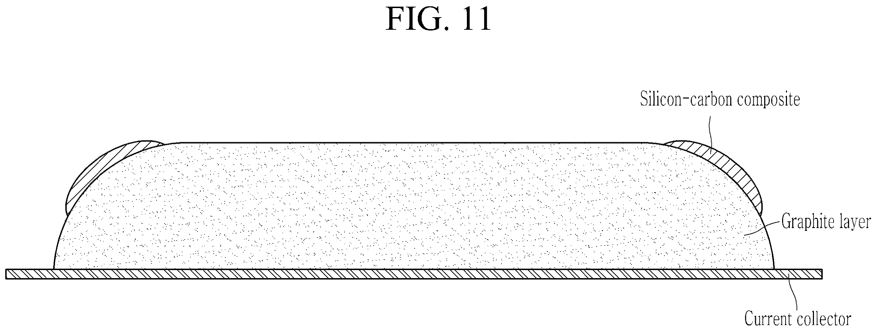

The first negative electrode active material slurry of Example 1 was coated and dried on the sliding region to manufacture a negative electrode in which a silicon-carbon composite was disposed in the upper edge region of the graphite layer (a structure of FIG. 11).

### Comparative Example 2:

A negative electrode and a half cell were manufactured in the same manner as in Example 1, with a difference that A, B, C, D, E, and F shown in FIGS. 3 and 4 and W1 shown in FIG. 1 were changed as shown in Table 1 below.

**Table 1:**

| | A (mm) | B (mm) | W1 (mm) | C (mm) | D (µm) | E (µm) | F (µm) |
|---|---|---|---|---|---|---|---|
| Example 1 | 1 | 9 | 4.5 | 10.1 | 100 | 55 | 35 |
| Example 2 | 3 | 5.8 | 2.9 | 9.5 | 102 | 51 | 27 |
| Example 3 | 1 | 6.3 | 3.15 | 8.9 | 101 | 49 | 42 |
| Comparative Example 1 | 1 | 15 | 7.5 | 16.3 | 103 | 63 | 42 |
| Comparative Example 2 | -0.1 | 12 | 6 | 15 | 109 | 37 | 30 |

In Table 1, when A was negative ("-"), the first layer was formed in an exposed form away from the negative electrode active material layer.

As shown in Table 1, the cells of Examples 1 to 3 had the sliding region with a smaller width (C) and thus a smaller area than the areas of Comparative Examples 1 and 2, resulting in effectively reducing or suppressing a short circuit.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

### Reference sign list

- 10: positive electrode
- 11: positive electrode tab
- 12: positive electrode terminal
- 21: negative electrode tab
- 22: negative electrode terminal
- 20: negative electrode
- 30: Separator
- 40: electrode assembly
- 50: case
- 60: sealing member
- 70: electrode tab
- 71: positive electrode tab
- 72: negative electrode tab
- 100: Lithium battery
- 200: negative electrode active material layer
- 202: first region
- 204: second region
- 206: edge region
- 208: first layer
- 210: second layer
- 212: current collector
- W1: width
- W2: width of first region
- A: separation distance
- B: total width of the first layer
- C: width of the edge region
- D: average thickness of negative active material layer
- E: average thickness of edge region
- F: average thickness of first layer

## Claims

1. A negative electrode (20) for a rechargeable lithium battery (100), the negative electrode (20) comprising:
a current collector (212); and
a negative electrode active material layer (200) on the current collector (212),
wherein the negative electrode active material layer (200) includes a first region (202), a second region (204), and an edge region (206),
wherein the first region (202) is in contact with the edge region (206), and the second region (204) is not in contact with the edge region (206),
wherein the second region (204) comprises a crystalline carbon negative electrode active material,
wherein the edge region (206) includes a first layer (208) in contact with the current collector (212), wherein the first layer (208) comprises a silicon-carbon composite negative electrode active material,
wherein the edge region (206) further includes a second layer (210) disposed on the first layer (208), wherein the second layer (210) comprises a crystalline carbon negative electrode active material,
wherein the first layer (208) of the edge region (206) extends from an end of the first region (202) toward an end of the negative electrode active material layer (200) to a width in a range of 45% to 85% of a total width to the end of the negative electrode active material layer (200) from the first region (202), and
wherein the first layer (208) of the edge region (206) is spaced apart from the end of the edge region (206).

2. The negative electrode (20) as claimed in claim 1, wherein a separation distance (A) from the end of the edge region (206) towards the first layer (208) of the edge region (206) is greater than or equal to 1 mm, and preferably in a range of 1 mm to 10 mm.

3. The negative electrode (20) as claimed in any of the previous claims, wherein the first region (202) comprises a crystalline carbon negative electrode active material.

4. The negative electrode (20) as claimed in any of the previous claims, wherein the first region (202) comprises a first layer (208) in contact with the current collector (212), wherein the first layer (208) of the first region (202) includes a silicon-carbon composite negative electrode active material, wherein the first region (202) further comprises a second layer (210) disposed on the first layer (208) and wherein the second layer (208) of the first region (202) includes a crystalline carbon negative electrode active material.

5. The negative electrode (20) as claimed in any of the previous claims, wherein a total width (B; W1 +W2) of the first layer (208) in the edge region (206) and in the first region (202) is in a range of 1% to 7% of the total width of the negative electrode active material layer (200) and preferably in a range of 1 mm to 20 mm.

6. The negative electrode (20) as claimed in any of the previous claims, wherein the edge region (206) has a sliding region having a thickness gradient of the negative electrode active material layer (200).

7. The negative electrode (20) as claimed in any of the previous claims, wherein the first region (202) and the second region (204) have a flat region having a substantially uniform average thickness of the negative electrode active material layer (200).

8. The negative electrode (20) as claimed in any of the previous claims, wherein a sum of a total width (B; W1 +W2) of the first layer (208) in the edge region (206) and in the first region (202) and a separation distance (A) is equal to or smaller than a width (C) of the edge region (206) and preferably is in a range of 50% to 100% of the width (C) of the edge region (206).

9. The negative electrode (20) as claimed in any of the previous claims, wherein a width (C) of the edge region (206) is in a range of 0.5% to 10% of a total width of the negative electrode active material layer (200), and preferably is in a range of 1 mm to 20 mm.

10. The negative electrode (20) as claimed in any of the previous claims, wherein an average thickness (F) of the first layer (208) in the edge region (206) and in the first region (202) is equal to or smaller than a difference between an average thickness (D) of the negative electrode active material layer (200) and an average thickness (E) of the edge region (206), and preferably is in a range of 50% to 100% of the difference between the average thickness (D) of the negative electrode active material layer (200) and the average thickness (E) of the edge region (206).

11. The negative electrode (20) as claimed in any of the previous claims, wherein an average thickness of the first layer (208) of the edge region (206) is in a range of 30% to 100% of a total thickness of the negative electrode active material layer (200).

12. The negative electrode (20) as claimed in any of the previous claims, wherein an average thickness of the negative electrode active material layer (200) is in a range of 60 µm to 200 µm.

13. The negative electrode (20) as claimed in any of the previous claims, wherein the crystalline carbon negative electrode active material of the second region (204) comprises at least one of natural graphite, artificial graphite, and a combination thereof; and/or
wherein the crystalline carbon negative electrode active material of the second layer (210) of the edge region (206) comprises at least one of natural graphite, artificial graphite, and a combination thereof; and/or
wherein the crystalline carbon negative electrode active material of the first region (202) comprises at least one of natural graphite, artificial graphite, and a combination thereof; and/or
wherein the crystalline carbon negative electrode active material of a second layer (210) of the first region (202) comprises at least one of natural graphite, artificial graphite, and a combination thereof.

14. The negative electrode (20) as claimed in any of the previous claims, wherein the silicon-carbon composite of the first layer (208) of the edge region (206) comprises silicon particles and a carbon-based material and/or
wherein a silicon-carbon composite of a first layer (208) of the first region (202) comprises silicon particles and a carbon-based material.

15. A rechargeable lithium battery (100), comprising:
the negative electrode (20) as claimed in any one of claim 1 to claim 14;
a positive electrode (10); and
an electrolyte.
